# EUROPEAN PATENT APPLICATION

(11) **EP 4 572 179 A1**
(43) Date of publication of application: **18.06.2025**
(21) Application number: 23852798.0
(22) Date of filing: 25.07.2023
(51) Int. Cl.: H04B 7/155, H04B 7/0404, H04W 74/00, H04W 74/08

(54) **METHOD AND DEVICE FOR BEAM DETERMINATION IN WIRELESS COMMUNICATION SYSTEM**

(30) Priority: 09.08.2022 KR 20220099224
(71) Applicant: LG Electronics Inc., Yeongdeungpo-gu Seoul 07336 (KR)
(72) Inventor: BAN, Choongsang, Seoul 06772 (KR); YOU, Hyangsun, Seoul 06772 (KR); KO, Hyunsoo, Seoul 06772 (KR); SHIM, Jaenam, Seoul 06772 (KR)
(74) Representative: Plasseraud IP
(86) International application number: PCT/KR2023/010712
(87) International publication number: WO 2024/034917

(57) **Abstract**

There is provided a method of operating an electronic device in a wireless communication system. The method includes receiving configuration information from a base station (BS), receiving a plurality of synchronization signal blocks (SSBs) from the base station, transmitting one or more SSBs of the plurality of SSBs to a user equipment (UE) based on the configuration information, receiving, from the UE, a physical random access channel (PRACH) preamble in a time resource related to a specific random access channel occasion (RACH occasion, RO) associated with a specific SSB of the one or more SSBs, and transmitting the PRACH preamble to the base station based on the specific SSB.

## Description

### [TECHNICAL FIELD]

The present disclosure relates to a wireless communication system. More specifically, the present disclosure relates to a method and device for determining a beam in a wireless communication system.

### [BACKGROUND]

Wireless communication systems have been widely deployed to provide various types of communication services such as voice or data. In general, the wireless communication system is a multiple access system capable of supporting communication with multiple users by sharing available system resources (bandwidth, transmission power, etc.). Examples of multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

In particular, as many communication devices require large communication capacity, more enhanced mobile broadband (eMBB) communication technology than the existing radio access technology (RAT) is proposed. Not only massive machine type communications (mMTC) which provide various services anytime and anywhere by connecting a large number of devices and objects, but also a communication system considering service/user equipment (UE) sensitive to reliability and latency are proposed. Various technical configurations for this are proposed.

### [DISCLOSURE]

### [TECHNICAL PROBLEM]

To solve the above-described problems, the present disclosure provides a method and device for assigning resources in a wireless communication system.

To solve the above-described problems, the present disclosure also provides a method of determining a beam in an access link between an NCR and a UE when the NCR receives a PRACH preamble from the UE.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [TECHNICAL SOLUTION]

A method of operating an electronic device in a wireless communication system according to an embodiment of the present disclosure may comprise receiving configuration information from a base station (BS), receiving a plurality of synchronization signal blocks (SSBs) from the base station, transmitting one or more SSBs of the plurality of SSBs to a user equipment (UE) based on the configuration information, receiving, from the UE, a physical random access channel (PRACH) preamble in a time resource related to a specific random access channel occasion (RACH occasion, RO) associated with a specific SSB of the one or more SSBs, and transmitting the PRACH preamble to the base station based on the specific SSB.

A direction of an uplink transmit beam used by the UE to transmit the PRACH preamble may be related to a direction of a downlink receive beam used by the UE to receive the one or more SSBs.

The PRACH preamble may be received based on an uplink transmit beam related to a downlink transmit beam in which the specific SSB of the plurality of SSBs has been received.

The configuration information may include a beam index of a downlink transmit beam used to transmit the one or more SSBs.

The configuration information may include information for a mapping between the plurality of SSBs and a plurality of ROs. The specific SSB may be determined based on the specific RO related to the time resource, in which the PRACH preamble is received, among the plurality of ROs.

One or more ROs associated with the one or more SSBs among the plurality of ROs may be related to a valid RO in which a reception of the PRACH preamble from the UE is expected. The reception of the PRACH preamble from the UE may not be performed in an RO other than the valid RO among the plurality of ROs.

The mapping between the plurality of SSBs and the plurality of ROs may be repeated periodically.

A method of operating a base station (BS) in a wireless communication system according to an embodiment of the present disclosure may comprise transmitting configuration information to an electronic device, transmitting a plurality of synchronization signal blocks (SSBs) to the electronic device, and receiving a physical random access channel (PRACH) preamble from the electronic device based on a specific SSB. One or more SSBs of the plurality of SSBs may be transmitted from the electronic device to a user equipment (UE) based on the configuration information. The PRACH preamble may be transmitted from the UE to the electronic device in a time resource related to a specific random access channel occasion (RACH occasion, RO) associated with the specific SSB of the one or more SSBs.

A direction of an uplink beam used by the electronic device to receive the PRACH preamble from the UE may be related to a direction of a downlink beam used by the electronic device to transmit the one or more SSBs to the UE.

The PRACH preamble may be received based on an uplink beam related to a downlink beam in which the specific SSB of the plurality of SSBs has been transmitted.

The configuration information may include a beam index of a downlink transmit beam in which the electronic device transmits the specific SSB to the UE.

The configuration information may include information for a mapping between the plurality of SSBs and a plurality of ROs. The specific SSB may be determined based on the specific RO related to the time resource, in which the PRACH preamble is received, among the plurality of ROs.

The configuration information may include downlink transmit beam information related to the one or more SSBs. One or more ROs associated with the one or more SSBs among the plurality of ROs may be related to a valid RO in which a reception of the PRACH preamble from the UE is expected. The reception of the PRACH preamble from the UE by the electronic device may not be performed in an RO other than the valid RO among the plurality of ROs.

The mapping between the plurality of SSBs and the plurality of ROs may be repeated periodically.

An electronic device in a communication system according to an embodiment of the present disclosure may comprise a first device including a first transceiver, a second device including a second transceiver, at least one processor, and at least one memory operably connectable to the at least one processor and storing instructions performing operations based on being executed by the at least one processor, and the operations may comprise all steps of a method according to any one of claims 1 to 7.

A base station in a wireless communication system according to an embodiment of the present disclosure may comprise a transceiver, at least one processor, and at least one memory operably connectable to the at least one processor and storing instructions performing operations based on being executed by the at least one processor, and the operations may comprise all steps of a method according to any one of claims 8 to 14.

A control device controlling an electronic device in a communication system according to an embodiment of the present disclosure may comprise at least one processor and at least one memory operably connected to the at least one processor, and the at least one memory may store instructions performing operations based on being executed by the at least one processor. The operations may comprise all steps of a method according to any one of claims 1 to 7.

A control device controlling a base station in a communication system according to an embodiment of the present disclosure may comprise at least one processor and at least one memory operably connected to the at least one processor, and the at least one memory may store instructions performing operations based on being executed by the at least one processor. The operations may comprise all steps of a method according to any one of claims 8 to 14.

In one or more non-transitory computer readable mediums according to an embodiment of the present disclosure storing one or more instructions, the one or more instructions may perform operations based on being executed by one or more processors, and the operations may comprise all steps of a method according to any one of claims 1 to 7.

In one or more non-transitory computer readable mediums according to an embodiment of the present disclosure storing one or more instructions, the one or more instructions may perform operations based on being executed by one or more processors, and the operations may comprise all steps of a method according to any one of claims 8 to 14.

### [ADVANTAGEOUS EFFECTS]

To solve the above-described problems, the present disclosure provides a method and device for assigning resources in a wireless communication system.

According to embodiments of the present disclosure, an existing initial access procedure can be equally applied even to a wireless communication system, in which an NCR is used, by defining an UL Rx beam operation of the NCR in an access link when transmitting in uplink a PRACH preamble between the NCR and a UE.

### [BRIEF DESCRIPTION OF THE DRAWINGS]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.
FIG. 1 illustrates an example of physical channels and general signal transmission used in the 3GPP system.
FIG. 2 illustrates an example of a structure of a radio frame used in NR.
FIG. 3 illustrates an example of a slot structure of an NR frame.
FIG. 4 illustrates an example of a self-contained slot.
FIGS. 5 to 8 illustrate an example of transmission network architecture for 5G.
FIG. 9 illustrates an example of a topology in which an NCR performs transmission and reception between a base station and a UE.
FIG. 10 illustrates an example of a beamforming operation of an existing RF repeater.
FIG. 11 illustrates an example of a beamforming operation of an NCR.
FIG. 12 illustrates a method of determining a resource in which a PRACH preamble according to an embodiment of the present disclosure can be transmitted.
FIG. 13 is a flowchart illustrating a method of transmitting and receiving a signal according to an embodiment of the present disclosure.
FIG. 14 is a flowchart illustrating a method of transmitting and receiving a signal according to another embodiment of the present disclosure.
FIG. 15 illustrates a communication system applied to various embodiments of the present disclosure.
FIG. 16 illustrates wireless devices applicable to various embodiments of the present disclosure.
FIG. 17 illustrates another example of wireless devices applicable to various embodiments of the present disclosure.
FIG. 18 illustrates a signal processing circuit for a transmission signal.
FIG. 19 illustrates an example of a wireless communication device applicable to the present disclosure.

### [DETAILED DESCRIPTION]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDCCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

The following technologies can be applied to various wireless access systems such as code division multiple access (CDMA), frequency division multiple access (FDMA), time division multiple access (TDMA), orthogonal frequency division multiple access (OFDMA), or single carrier-frequency division multiple access (SC-FDMA). The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the present disclosure is described based on the 3GPP communication system (e.g., LTE or NR etc.), but the technical spirit of the disclosure is not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The 3GPP 6G may mean technology after TS Release 17 and/or Release 18. "xxx" denotes a detailed standard document number. The LTE/NR/6G may be collectively referred to as the 3GPP system. For background art, terms, abbreviations, etc. used in the present disclosure, reference can be made to items described in standard documents published prior to the present disclosure. For example, the following document may be referred to.

### 3GPP LTE

- 36.101: User Equipment (UE) radio transmission and reception
- 36.211: Physical channels and modulation
- 36.212: Multiplexing and channel coding
- 36.213: Physical layer procedures
- 36.214: Physical layer Measurements
- 36.321: Medium Access Control (MAC) protocol specification
- 36.331: Radio Resource Control (RRC)
- 37.213: Physical layer procedures for shared spectrum channel access

### 3GPP NR

- 38.101-1: Part 1: Range 1 Standalone
- 38.101-2: Part 2: Range 2 Standalone
- 38.101-2: Part 3: Range 1 and Range 2 Interworking operation with other radios
- 38.211: Physical channels and modulation
- 38.212: Multiplexing and channel coding
- 38.213: Physical layer procedures
- 38.214: Physical layer Measurements
- 38.215: Physical layer measurements
- 38.321: Medium Access Control (MAC) protocol specification
- 38.331: Radio Resource Control (RRC)

For the purpose of explaining the present disclosure, terms not defined above are as follows.

IAB-node: RAN node that supports wireless access to UEs and wirelessly backhauls the access traffic.

IAB-donor: RAN node that provides UE's interface to core network and wireless backhauling functionality to IAB nodes.

Abbreviations used in the present disclosure may be defined as follows.
IAB: Integrated Access and Backhaul
CSI-RS: Channel State Information Reference Signal
DgNB: Donor gNB (gNodeB)
AC: Access
BH: Backhaul
FH: Fronthaul
CU: Centralized Unit
DU: Distributed Unit
RU: Remote Unit
MT: Mobile terminal
CU: Centralized Unit
IAB-MT: IAB mobile terminal
NGC: Next-Generation Core network
SA: Stand-alone
NSA: non-stand-alone
EPC: Evolved Packet Core

### Physical Channel and Frame Structure

### Physical Channel and General Signal Transmission

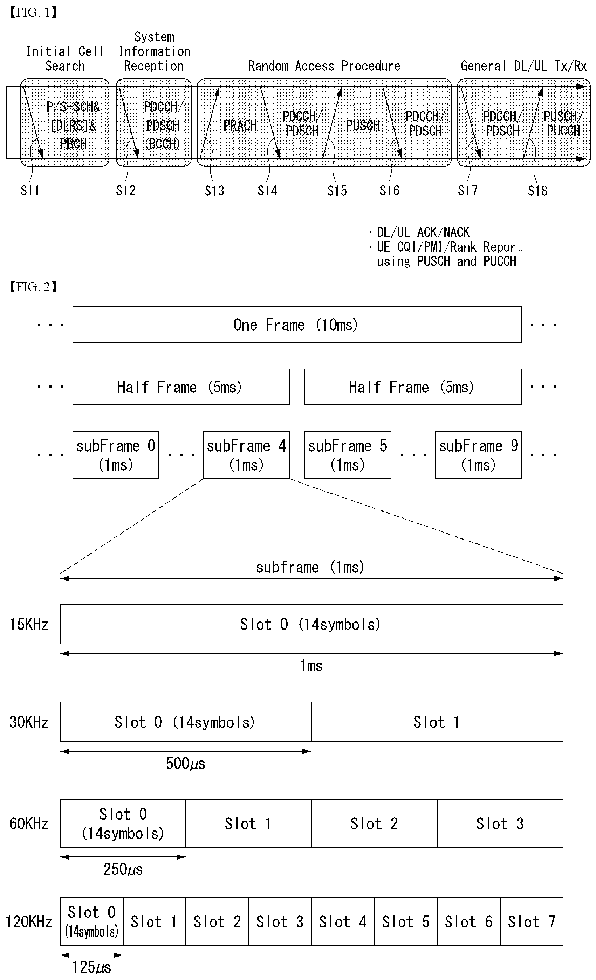

FIG. 1 illustrates an example of physical channels and general signal transmission used in the 3GPP system.

In a wireless communication system, the UE receives information from the eNB through downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S11). To this end, the UE may receive a primary synchronization signal (PSS) and a (secondary synchronization signal (SSS) from the eNB and synchronize with the eNB and acquire information such as a cell ID or the like. Thereafter, the UE may receive a physical broadcast channel (PBCH) from the eNB and acquire in-cell broadcast information. The UE receives a downlink reference signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S12).

When there is no radio resource first accessing the eNB or for signal transmission, the UE may perform a Random Access Procedure (RACH) to the eNB (S13 to S16). To this end, the UE may transmit a specific sequence to a preamble through a Physical Random Access Channel (PRACH) (S13 and S15) and receive a response message (Random Access Response (RAR) message) for the preamble through the PDCCH and a corresponding PDSCH. In the case of a contention based RACH, a Contention Resolution Procedure may be additionally performed (S16).

The UE that performs the above procedure may then perform PDCCH/PDSCH reception (S17) and Physical Uplink Shared Channel (PUSCH)/Physical Uplink Control Channel (PUCCH) transmission (S18) as a general uplink/downlink signal transmission procedure. Control information that the UE transmits to the base station may be referred to as uplink control information (UCI). The UCI may include hybrid automatic repeat and request (HARQ) acknowledgement/negative ACK (ACK/NACK), scheduling request (SR), channel state information (CSI), etc. The CSI may include a channel quality indication (CQI), a precoding matrix indicator (PMI), a rank indicator (RI), etc. The UCI may be generally transmitted on the PUCCH, but if control information and data need to be transmitted at the same time, the UCI may be transmitted on the PUSCH. The UE may aperiodically transmit the UCI to the base station on the PUSCH based on a request/indication of the network.

New radio access technology (new RAT, NR) is described below.

As more and more communication devices require larger communication capacity, there is a need for enhanced mobile broadband communication compared to the existing radio access technology (RAT). Massive machine type communications (MTC) which provide various services anytime and anywhere by connecting many devices and objects are also one of the major issues to be considered in next-generation communications. In addition, a communication system design considering a service/UE sensitive to reliability and latency is also being discussed. As above, the introduction of next generation RAT considering enhanced mobile broadband communication, massive MTC, ultra-reliable and low latency communication (URLLC), etc. is discussed, and the technology is called new RAT or NR for convenience in various embodiments of the present disclosure.

### Orthogonal Frequency Division Multiplexing (OFDM) Numerology

FIG. 2 illustrates an example of a structure of a radio frame used in NR.

A new radio access technology (RAT) system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

Referring to FIG. 2, in NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).

Table 1 shows that when the normal CP is used, the number of symbols per slot, the number of slots per frame, and the number of slots per subframe vary depending on the SCS.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

In Table 1, N^{slot}_{symb} is the number of symbols in the slot, N^{frame,u}ₛₗₒₜ is the number of slots in the frame, and N^{subframe,u}ₛₗₒₜ is the number of slots in the subframe. Table 2 shows that when the extended CP is used, the number of symbols per slot, the number of slots per frame, and the number of slots per subframe vary depending on the SCS.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

NR supports multiple numerologies (or subcarrier spacing (SCS)) for supporting diverse 5th generation (5G) services. For example, if the SCS is 15 kHz, the NR supports a wide area in conventional cellular bands; if the SCS is 30 kHz/60 kHz, the NR supports a dense-urban, lower latency and wider carrier bandwidth; and if the SCS is 60 kHz or higher, the NR supports a bandwidth greater than 24.25 GHz in order to overcome phase noise.

An NR frequency band may be defined as two types of frequency ranges FR1 and FR2. Values of frequency ranges may be changed. For example, the two types of frequency ranges FR1 and FR2 may be defined as in Table 3 below.

**[Table 3]**

| Frequency Range designation | Corresponding Frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

For convenience of explanation, FR1 among the frequency ranges used in the NR system may mean "sub 6 GHz range", and FR2 may mean "above 6 GHz range" and may call millimeter wave (mmW).

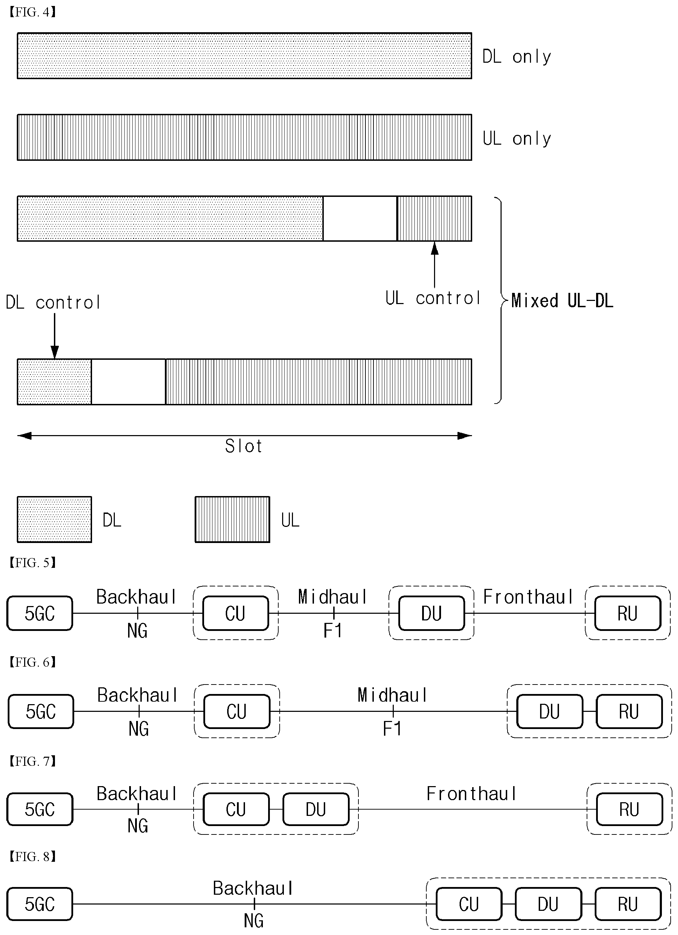

As described above, values of the frequency range of the NR system may be changed. For example, FR1 may include a range of 410 MHz to 7125 MHz as shown in FIG. 4 below.

**[Table 4]**

| Frequency Range designation | Corresponding Frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Referring to FIG. 4, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 may include an unlicensed band. The unlicensed band may be used for diverse purposes, for example, used for communication for vehicles (e.g., self-driving).

In the NR system, OFDM(A) numerology (e.g., SCS, CP length, etc.) may be differently configured between a plurality of cells merged into one UE. Hence, an (absolute time) duration of a time resource (e.g., subframe (SF), slot or transmission time interval (TTI)) (for convenience, collectively referred to as a time unit (TU)) consisting of the same number of symbols may be configured differently between the merged cells.

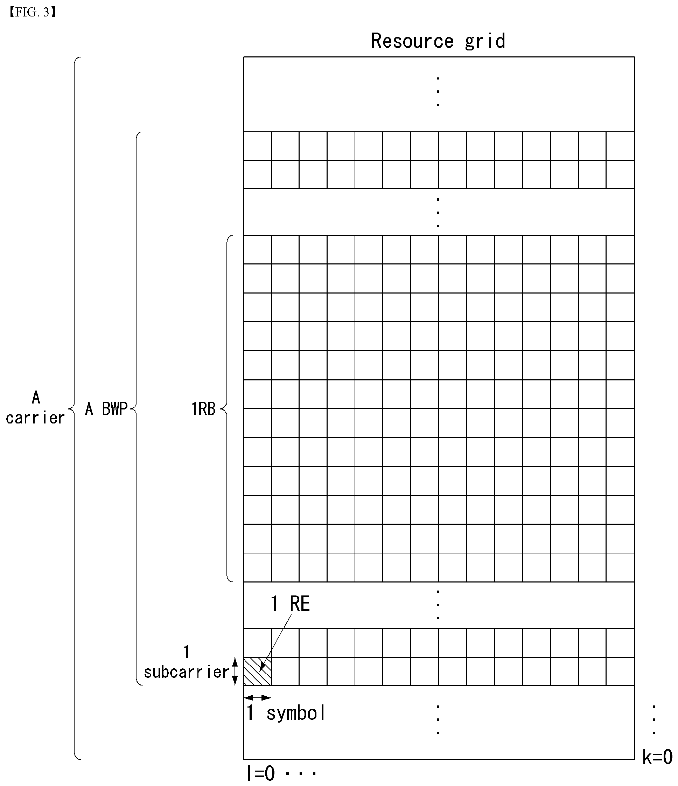

FIG. 3 illustrates an example of a slot structure of an NR frame.

Referring to FIG. 3, a slot includes a plurality of symbols in a time domain. For example, one slot includes seven symbols in a normal CP, while one slot includes six symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., five) BWPs. The data communication may be performed through an activated BWP, and only one BWP may be activated in one UE. In a resource grid, each element is referred to as a resource element (RE), and one complex symbol may be mapped to each RE.

FIG. 4 illustrates an example of a self-contained slot.

In the NR system, a frame is characterized by a self-contained structure in which all of a DL control channel, DL or UL data, and an UL control channel can be included in one slot. For example, the first N symbols in the slot may be used to transmit the DL control channel (hereinafter, referred to as a DL control region), and the last M symbols in the slot may be used to transmit the UL control channel (hereinafter, referred to as an UL control region), where N and M are an integer greater than or equal to 0. A resource region (hereinafter, referred to as a data region) between the DL control region and the UL control region may be used for DL data transmission or UL data transmission. For example, the following configuration may be considered. Each duration is listed in chronological order.
1. DL only configuration
2. UL only configuration
3. Mixed UL-DL configuration

- DL region + Guard Period (GP) + UL control region
- DL control region + GP + UL region

* DL region: (i) DL data region, (ii) DL control region + DL data region
* UL region: (i) UL data region, (ii) UL data region + UL control region

The PDCCH may be transmitted in the DL control region, and the PDSCH may be transmitted in the DL data region. The PUCCH may be transmitted in the UL control region, and the PUSCH may be transmitted in the UL data region. On the PDCCH, downlink control information (DCI), for example, DL data scheduling information, UL data scheduling information, etc., may be transmitted. On the PUCCH, uplink control information (UCI), for example, positive acknowledgement/negative acknowledgement (ACK/NACK) information, channel state information (CSI), scheduling request (SR), etc., for DL data may be transmitted. The GP provides a time gap in a process of switching the base station and the UE from a transmission mode to a reception mode or a process of switching from the reception mode to the transmission mode. Some symbols at time at which DL is switched to UL in the subframe may be configured as the GP.

FIGS. 5 to 8 illustrate an example of transmission network architecture for 5G.

Referring to FIG. 5, ITU-T (Telecommunication Standardization Sector) has adopted slightly different 5G transmission network architecture consisting of three logical elements of a control unit (CU), a distributed unit (DU) and a radio unit (RU). In this model, functions of a mid-layer and a lower layer are split as the DU and the RU. Based on the functional split between the DU and the RU, the RU implements a radio frequency (RF) functionality, and if possible, also implements a low-PHY functionality and a high-PHY functionality.

Referring to FIGS. 6 to 8, CUs, DUs, and RUs may be grouped in different combinations to form actual physical network elements based on network requirements. This may provide flexibility to accommodate various network architectures, applications, and transmission network requirements.

As illustrated in FIGS. 5 to 8, a transmission network between the 5th generation core network (5GC) and the CU is referred to as backhaul, and a backhaul network implements a 3GPP next generation (NG) interface. In the same manner, a transmission network between the CU and the DU is referred to as midhaul, and a midhaul network implements a 3GPP F1 interface. Finally, a transmission network between the DU and the RU is referred to as fronthaul. The backhaul, the midhaul, and the fronthaul are generally referred to as xhaul.

### Reconfigurable Intelligent Surface (RIS)

An RIS may be used to control the propagation of electromagnetic waves by changing electrical and magnetic properties of the electromagnetic waves on the surface. The RIS is also known as an intelligent reflecting surface (IRS) and a large intelligent surface (LIS) and may have a programmable structure. The RIS may be used to sense a wireless environment by integrating sensing functions, in addition to controlling the propagation of the electromagnetic waves. The properties of wireless channels can be controlled at least partially by deploying the RIS in an environment in which a wireless system operates.

The functionality of the RIS can provide many advantages, including the possibility of improving stability and coverage performance through beamforming or range extension. The ability to control a propagation environment has somewhat changed the existing wireless system design paradigm in which wireless channels were always considered as uncontrollable entities that distorted the transmitted signal. Thus, a transmitter (TX) and a receiver (RX) have been traditionally designed to equalize an effect of the channel. There are various expected scenarios, for example, a single RIS being deployed on a wall to indicate a signal coming from a predetermined direction.

The use of the RIS can provide a 'transmission effect' of a gNB signal that allows external signal to be transmitted into the building, and a coverage for a shaded area can be improved by providing a 'reflection effect' of an NLoS environment.

### Network-Controlled Repeater (NCR) of NR

### Existing RF Repeater

An RF repeater is a non-regenerative relay node that simply amplifies and forwards everything it receives. The main advantages of the RF repeaters are their low cost, ease of deployment, and not increasing latency. The main disadvantage of the RF repeaters is that they can amplify signals and noise to contribute to an increase in interference (contamination) of the system.

### Release (Rel)-17 Work Item (WI) of RF Repeater (RAN4)

The RF repeater is specified in Rel-17 of RAN4 for a frequency range 1 (FR1) frequency division duplex (FDD)/time division duplex (TDD) and a frequency range 2 (FR2) band. The Rel-17 WID contains only RF requirements. The RAN4 work item description (WID) (RP-210818) specifies that it is assumed that the RF repeater does not perform adaptive beamforming toward a UE.

### NCR for Rel-18 NR

Coverage is a basic aspect of cellular network deployment. When deployed, mobile operators rely on various types of network nodes to provide blanket coverage. The deployment of regular full-stack cells is one option but is not always possible (e.g., without backhaul availability) or is not always economically viable.

As a result, a new type of network node has been considered to increase the network deployment flexibility of the mobile operator. For example, integrated access and backhaul (IAB) has been introduced in Rel-16 and enhanced in Rel-17 to a new type of network node that does not require wired backhaul. Another type of network node is an RF repeater that simply amplifies and forwards all signals it receives. The RF repeaters have been widely deployed to complement the coverage provided by regular full-stack cells in 2G, 3G and 4G. In Rel-17, RAN4 has specified RF and electromagnetic compatibility (EMC) requirements for RF repeaters for NR targeting both FR1 and FR2.

The RF repeaters provide a cost-effective means of extending network coverage. However, the RF repeaters have limitations in simply performing amplification and forwarding operations without considering various factors that can improve performance. These factors may include information on semi-static and/or dynamic downlink/uplink configurations, adaptive transmitter/receiver spatial beamforming, ON-OFF states, and the like.

Compared to the existing RF repeater, the NCR improves a function of receiving and processing side control information. The side control information enables a network control repeater to perform amplification and forwarding operations in a more efficient manner. Potential advantages may include mitigation of unnecessary noise amplification, better spatial directivity transmission and reception, and simplified network integration.

The study of NCR for NR focuses on the following scenarios and assumptions. The NCR is an in-band RF repeater used to extend a network range in the FR1 and FR2 bands, and the FR2 deployment during the study may be prioritized for both outdoor and outdoor to indoor (O2I) scenarios. It corresponds only to a single hop stationary NCR. The NCR is transparent to the UE. The NCR may simultaneously maintain a gNodeB (gNB)-repeater link and a repeater-UE link. Here, cost efficiency is a key consideration for the NCR.

In RAN1, there is a study and identification of whether the following side control information, including a maximum transmission power assumption, is needed for the NCR. That is, there is a study and identification of whether side control information such as beamforming information, timing information for aligning transmission/reception boundaries of the NCR, uplink-downlink TDD configuration information, On-Off information for efficient interference management and energy efficiency enhancement, and power control information (as a second priority) for efficient interference management is needed for the NCR. In addition, the RAN1 has a study and identification of L1/L2 (layer 1/layer 2) signal (including configuration of L1/L2) for transmitting the side control information.

RAN2 and RAN3 have a study on identification and authentication of the NCR. Here, coordination with SA3 may be necessary. The network-controlled repeater (NCR) may consist of an RU and a MT.

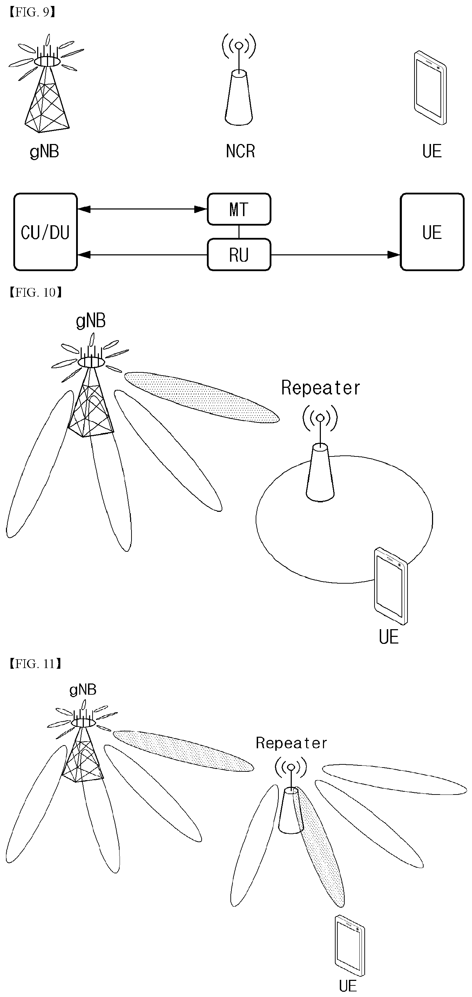

FIG. 9 illustrates an example of a topology in which an NCR performs transmission and reception between gNB and a UE.

In FIG. 9, the gNB may include a CU and/or a DU, and the NCR may be connected to the gNB. The NCR may consist of a mobile terminal (MT) and an RU.

The RU may consist of only an RF layer. The RU may receive a signal sent by the gNB at an RF end and transmit the signal to the UE, and the RU may receive a signal sent by the UE at the RF end and transmit the signal to the gNB. The RU only transmits the signal between the gNB and the UE, but cannot itself generate signal/channel and transmit it to the gNB/UE or receive signal/channel from the gNB/UE and search for it. The RU may consider adjusting the transmit/receive beam direction, downlink/uplink direction, whether it is On/Off, transmit power, etc., at the RF end, in order to transmit the received signal. However, such an operation of the RU cannot be determined by the NCR itself, and may be entirely controlled by the gNB.

The MT may include an RF layer and L1, L2 and/or L3 layers. For example, the MT may include the RF layer and the L1 layer or the L1/L2 layer, or the MT may include the RF layer and the L1/L1/L3 layer. The MT may search/receive the signal/channel transmitted by the gNB, and the MT may generate and transmit the signal/channel transmitted to the gNB. The MT may receive information (i.e., side control information) required to control an operation of the RU from the gNB. The MT does not perform transmission/reception with the UE.

When compared to the existing RF repeater, the NCR can operate as follows.

FIG. 10 illustrates an example of a beamforming operation of an existing RF repeater. FIG. 11 illustrates an example of a beamforming operation of an NCR.

Referring to FIGS. 10 and 11, the existing RF repeater performs beamforming applying an omni-direction or a fixed direction, as illustrated in FIG. 10. On the other hand, the NCR can obtain a beamforming gain by adaptively adjusting a transmit/receive beam direction of the NCR based on a location of the UE and channel conditions of the UE, as illustrated in FIG. 11.

The existing RF repeater cannot distinguish downlink and uplink directions in a TDD system and always performed simultaneously transmission and reception in the downlink direction and the uplink direction. Alternatively, the existing RF repeater applies only a fixed TDD configuration to perform switching between the downlink direction and the uplink direction in a given time pattern. On the other hand, the NCR may perform downlink/uplink switching in consideration of the TDD configuration. Hence, this enables adaptive downlink/uplink operation and can reduce power waste and interference caused by transmitting unnecessary signals.

The existing RF repeater always amplifies and forwards the power of a received signal regardless of whether the gNB and the UE transmit signals. Hence, this unnecessarily wastes the power and increases the interference to the surroundings. The NCR may perform the On/Off operation to turn off the operation of the RU when there is no signal to transmit to the gNB/UE, thereby not transmitting unnecessary signals.

The existing RF repeater amplified and forwarded the power of the received signal at a fixed ratio. On the other hand, an influence of interference on the surroundings can be reduced by reducing the transmission power of the NCR when the signal is transmitted with unnecessarily large power, thereby reducing, and the signal can be stably transmitted to the receiver by increasing the transmission power of NCR when the signal is transmitted with low power.

The existing RF repeater operates without knowing downlink/uplink slot boundaries. On the other hand, the NCR shall know transmission/reception boundaries of the downlink and uplink in order to adaptively adjust the beamforming, the on/off, the downlink/uplink direction, the transmission power, etc. as described above. Through this, the NCR can differently apply the operation of the RU per unit time (e.g., slot or symbol).

Based on this discussion, the present disclosure proposes a method of determining an UL Rx beam from an NCR to an access link when transmitting PRACH resources.

The present disclosure assumes an operation in the NCR. However, the present disclosure can also be applied to equipment/device not the NCR. In particular, the contents of the present disclosure can be applied for the operation of the RIS. To this end, the NCR mentioned in the present disclosure can be replaced by the RIS and extended/interpreted. In this case, the RU may perform a role of transmitting a signal from the base station to the UE and a role of transmitting the signal from the UE to the base station in the RIS, and the MT may perform a role of receiving side control information for controlling signal transmission of the RU from the base station. In the present disclosure, the network may be interpreted as being replaced by the base station or the CU/DU. The base station may also be interpreted as being replaced by the network or the CU/DU.

The NCR aims to control the more intelligent operation of the RU beyond the limitations of the simple signal amplification and forwarding of an existing radio frequency (RF) repeater. To this end, the concept of side control information has been newly introduced in the NCR. The operation control of the RU can be partially performed by transmitting and receiving the side control information between the base station and the MT.

However, as the cost-effectiveness of the NCR is emerging as an important factor, it may be difficult for the MT to have a full control capability in the form of a full protocol stack. However, the NCR enables the efficient control of the RU by utilizing the side control information, and thus it has the advantage of being differentiated from the existing RF repeater that is implemented only. In this way, it can be expected that techniques will be applied that can obtain a benefit of performance with a small investment of cost through the development of intelligent operation technology for the NCR.

The NCR may consider controlling the transmit/receive beam direction, the DL/UL direction, whether it is on/off, the transmission power, etc. at the RF end so as to forward the signal received by the RU. However, the operation of the RU cannot be determined by the NCR itself and can be entirely controlled by the base station. To this end, the MT may receive information (i.e., side control information) required to control the operation of the RU from the base station.

For example, the side control information may include all or some of the following information.
1) Beamforming information
   → Information on transmit/receive beam directions of RU
   → This information may include beam directions for uplink transmission to the base station, downlink reception from the base station, downlink transmission to the UE, and/or uplink reception from the UE.
2) Timing information to align transmission/reception boundaries of network-controlled repeater (NCR)
   → Information for RU to align transmission/reception slots or boundaries
3) Information on uplink-downlink TDD configuration
   → Information on downlink/uplink directions of RU
4) ON-OFF information for efficient interference management and improved energy efficiency
   → Information on ON-OFF operation of RU
5) Power control information for efficient interference management)
   → Information on transmission power of RU
   → This information may include uplink transmission power to base station and/or downlink transmission power to UE.

The present disclosure proposes a method of performing UL Rx from an access link when an NCR performs UL forwarding of PRACH resources from a perspective of beamforming information management, which is one of the main technologies handled in an NCR environment.

In a typical cellular wireless communication environment, there may be a UE that cannot immediately receive a signal from a base station due to a coverage hole or blockage. The NCR may provide a coverage extension for such an environment.

In the RAN1#109-e meeting, the terminology related to the NCR and a channel environment that can be assumed were agreed. Assuming that there is a connection between base station-NCR-UE in the NCR topology, the NCR includes function entities of NCR-MT and NCR-Fwd. The NCR-MT was defined as a node that can operate like the UE in itself and transmits and receives side control information which, is a new concept introduced in the NCR, to and from the base station, and a link between the NCR-MT and the base station was defined as a control link. The NCR-Fwd performs only a simple AF (amplify & forward) relay like an existing RF repeater, and a backhaul link toward the UE and an access link toward the UE were defined based on the NCR-Fwd.

In this instance, it was agreed so that the backhaul link of the NCR can reuse information configured or indicated to the NCR-MT through the control link between the base station and the NCR-MT. That is, when determining downlink receive (DL Rx) beam information or uplink transmit (UL Tx) beam information for the backhaul link of the NCR-Fwd, the backhaul link of the NCR-Fwd may inherit and reuse an existing beam adaptation operation performed between the NCR-MT and the base station. On the other hand, because entities transmitting and receiving signals are the NCR-Fwd and the UE, it may be impossible for the access link of the NCR to reuse the beam adaptation operation performed in the NCR-MT.

Therefore, in order to properly perform the beam adaptation operation in the access link of the NCR-Fwd, beam index information related to the access link of the NCR-Fwd needs to be newly defined so that a forwarding operation between the access link and the backhaul link can be normally performed. In addition, the newly defined beam index information in the access link of the NCR-Fwd needs to be properly mapped between beam identifiers (IDs) (or resources) with which the NCR-Fwd performs a DL Rx operation or an UL Tx operation in the backhaul link.

Furthermore, it is necessary to newly define or design a method of deciding Tx and Rx beams of the NCR-Fwd in the access link based on the newly defined beam index information in the access link of the NCR-Fwd, and this can be utilized to perform an initial access of the UE existing in a shadow area in terms of providing the above-mentioned coverage extension, which is one of the main purposes of the NCR. That is, the initial access of the UE in the shadow area may be expected to be performed by performing AF relay of synchronization signal block (SSB) beams broadcasted from the base station to the access link.

A general beam-based initial access procedure may include that when a UE in a cell search process receives a specific SSB based on an SSB beam sweeping, that a base station performs with periodicity, to form a beam pair, the UE transmits a PRACH to an RO (RACH occasion), in which an association relationship is configured through the SSB, to proceed with a RACH procedure. However, when the NCR-Fwd performs DL Tx or UL Rx to the access link in DL/UL forwarding, a procedure for determining a beam direction, a procedure for determining a resource used by a transmitted beam, and a procedure for criteria in which DL/UL forwarding is performed are not defined. In particular, when the initial access is performed in the NCR environment, a definition of a beam determination method for performing UL Rx to the access link is required in order for the NCR-Fwd to perform UL forwarding of PRACH resources.

Accordingly, the present disclosure proposes a method of determining a beam performing UL Rx to an access link when an NCR-Fwd performs UL forwarding of PRACH resources.

In general, in a process of performing a RACH procedure, an association between an RO capable of transmitting a PRACH preamble and an SSB (or SS/PBCH block) may be configured. For example, the association between the RO and the SSB may be expressed as in Table 5 below.

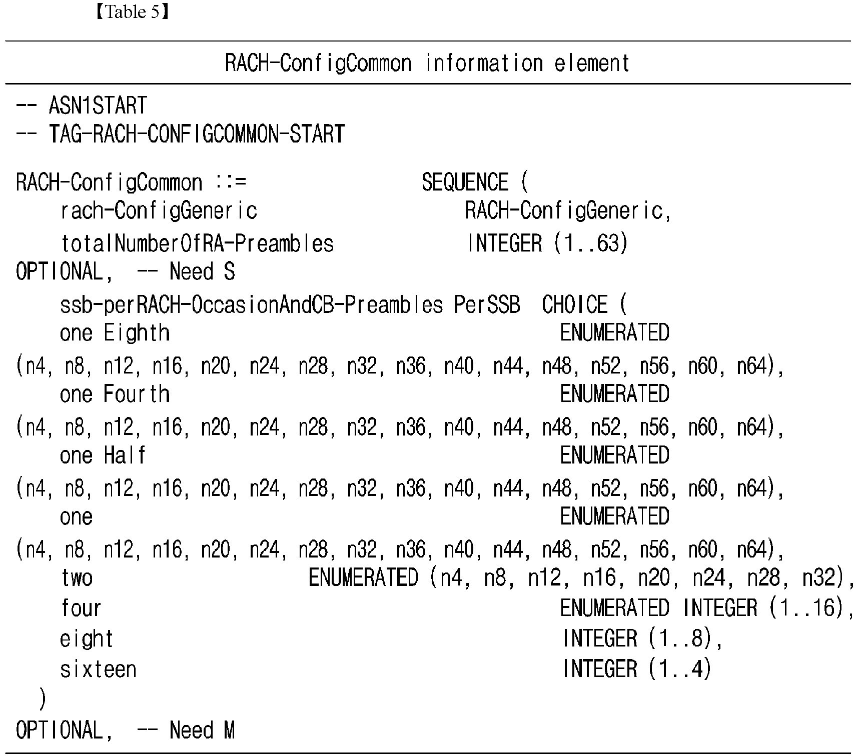

Referring to FIG. 5, the RO may be configured with an association with the SSB based on rach-ConfigCommon included in system information block (SIB) 1 of the PBCH, and rach-ConfigGeneric, which is a lower parameter of rach-ConfigCommon, may include RO resource allocation and preamble sequence generation information. Additionally, the RO may be mapped 1:1, 1:N, or N:1 with the SSB based on information of ssb-perRACH-Occasion. That is, at least one RO may be associated with at least one SSB based on the SSB.

The UE may transmit the PRACH preamble to the NCR or the base station in a time resource in which the RO is allocated. In this instance, the UE may use a DL Rx beam in which the SSB associated with the RO is received, as an UL Tx beam, based on the assumption of beam correspondence. The UL Tx beam may be a beam for the UE to transmit the PRACH preamble to the NCR or the base station.

When a beam operation is performed, information configured for beam transmission may include a Tx beam index and resources allocated to transmit the beam index. The base station may trigger the beam transmission based on the information. In this way, in the NCR environment, when the NCR-Fwd UL-forwards a PRACH preamble to the base station, there may be a need to define a method of determining a beam direction in which the NCR-Fwd performs the UL Rx, a method of determining a time resource in which the NCR-Fwd performs the UL Rx, and a method of determining a UL forwarding operation. Accordingly, the present disclosure proposes a method of determining a UL Rx beam to the access link from a perspective of the above-described beam operation when the NCR-Fwd UL forwards the PRACH preamble to the base station in the NCR environment.

### Method of determining ULRx beam direction of NCR-Fwd in PRACH transmission

An NCR-Fwd may assume a DL/UL beam correspondence to an access link. That is, based on the assumption, the NCR-Fwd may use a DL Tx beam used when performing DL forwarding to the access link as an UL Rx beam when performing UL forwarding to the access link.

Examples of a method in which the NCR-Fwd indicates the DL Tx beam for performing the DL forwarding include a method of indicating a transmission configuration indicator (TCI)-state identifier (ID) or a beam index associated with a reference signal (RS) (e.g., SSB/CSI-RS).

In a time resource in which any RO is UL-forwarded, there may be an SSB (i.e., an SSB index) associated with the RO. Therefore, determining an UL Rx beam direction of the access link in order for the NCR-Fwd to transmit a PRACH preamble received from a UE to a base station may be determining a DL Tx beam to an access link to which transmission of the SSB associated with the RO is configured or indicated. Here, the DL Tx beam may be a DL Tx beam on which DL forwarding is performed.

In this case, when the NCR-Fwd DL-forwards the SSB to the UE in the access link, an indication of the DL Tx beam of the access link may be performed by an indication via the TCI-state ID of the access link or by an indication of the DL Tx beam of the NCR-Fwd. Here, the SSB may be received by the NCR-Fwd from the base station.

That is, when the NCR-Fwd transmits an SSB of a specific index received from the base station to the access link, in order to indicate a DL Tx beam of the access link, the base station may indicate a TCI-state ID or a direct beam index to the NCR-MT for each SSB index or for SSB of a group of specific indexes via radio resource control (RRC), MAC-control element (MAC-CE) or downlink control information (DCI). As above, a method of indicating a DL Tx beam of the NCR-Fwd to the access link and a method of indicating a UL Rx beam of the NCR-Fwd to the access link may be indicated equally or similarly based on SSB-to-RO mapping. The SSB-to-RO mapping may be a mapping between the SSB and the RO, and the SSB and the RO may be mapped 1:1, 1:N, or N:1.

The NCR-Fwd may expect that the UL Rx beam of the access link will be indicated as the DL Tx beam for a time interval in which the RO indicated by SSB-to-RO mapping information received by the NCR-MT exists. Alternatively, the NCR-Fwd may consider that the DL Tx beam transmitting the corresponding SSB is always applied even if the UL Rx beam of the access link is not separately indicated by the base station for the time interval in which the RO indicated by the SSB-to-RO mapping information received by the NCR-MT exists.

In the SSB-to-RO mapping, the number of PRACH preambles configured to the RO may vary depending on whether the SSB and the RO are mapped 1:1, 1:N, or N:1. When the SSB and the RO are mapped 1:1, one RO may be associated per SSB index, and the number of generated PRACH preambles of the corresponding RO may be used as it is. In other words, the number of PRACH preambles related to one RO per SSB may be used as it is. For example, in Table 6 below, if parameter 'ssb-perRACH-OccasionAndCB-PreamblesPerSSB' in RACH-ConfigCommon is set to one and value n32, 32 PRACH preambles (i.e., n32) may be set per one SSB and may be usable.

If the SSB and the RO are mapped 1:1, for example, if parameter ssb-perRACH-OccasionAndCB-PreamblesPerSSB in RACH-ConfigCommon in Table 6 is set to oneHalf and value n32, two ROs may be mapped per one SSB (i.e., oneHalf), and 64 PRACH preambles (i.e., n32) may be set per SSB and may be usable.

If the SSB and the RO are mapped N:1, the PRACH preambles configured to the RO per SSB may be equally used. For example, in Table 1, if the number of configured PRACH preambles is 64 and parameter ssb-perRACH-OccasionAndCB-PreamblesPerSSB is set to two and value n32, 32 PRACH preambles may be set per one SSB and may be usable.

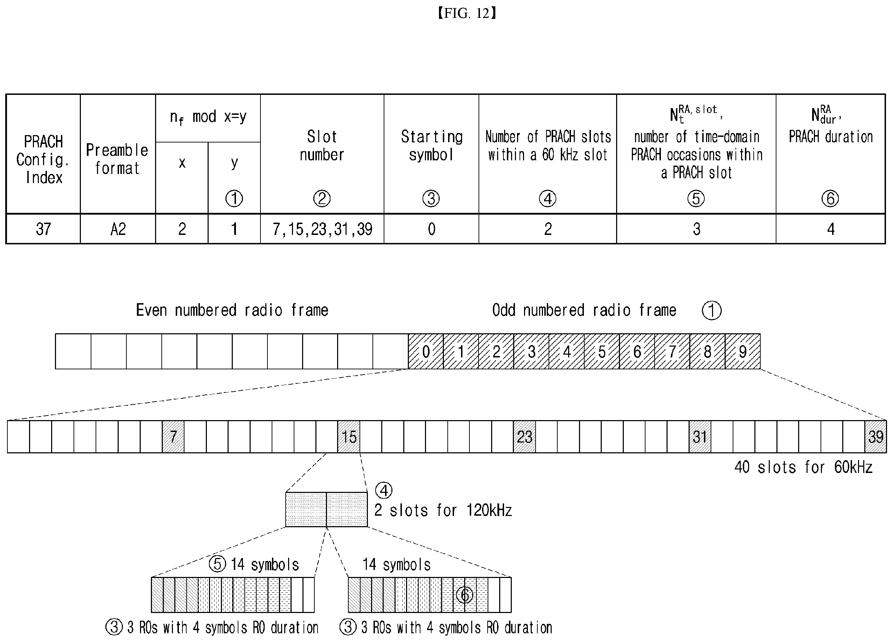

FIG. 12 illustrates a method of determining a resource in which a PRACH preamble according to an embodiment of the present disclosure can be transmitted.

Referring to FIG. 12, a time resource related to a subframe, a slot, or a symbol in which the PRACH preamble can be transmitted may be generally determined based on PRACH-ConfigruationIndex set in RACH-ConfigGeneric. And, a PRACH configuration period can be determined based on PRACH-ConfigruationIndex, and an association period for the SSB-to-RO mapping can be known based on a table on the PRACH configuration period and an association period. The table on the PRACH configuration period and the association period may be represented as in Table 6 below.

**[Table 6]**

| PRACH configuration period (msec) | Association period (number of PRACH configuration periods) |
|---|---|
| 10 | {1, 2, 4, 8, 16} |
| 20 | {1, 2, 4, 8} |
| 40 | {1, 2, 4} |
| 80 | {1, 2} |
| 160 | {1} |

In Table 6, the unit of the PRACH configuration period may be msec, and the association period may be the number of PRACH configuration periods. Referring to Table 6, for example, if 24 ROs have a PRACH configuration period of 20 ms and 64 SSBs and ROs are mapped 1: 1, the association period may be set to 4 PRACH configuration periods. Therefore, a total of 96 ROs (= 4*24) may be sequentially mapped to each of the 64 SSB indices, and the remaining 32 ROs may not be used for PRACH preamble transmission.

However, in the NCR environment, not all the SSBs may perform DL forwarding through the NCR-Fwd. For example, there may be a case where the base station broadcasts SSBs with SSB indices of SSB#0 to SSB#7, and SSBs with the SSB indices of SSB#4 to SSB#7 among the SSBs are transmitted to the access link through the NCR. In this case, only ROs associated with the SSBs with the SSB indices of SSB#4 to SSB#7 may be valid for the UL forwarding operation of the PRACH preamble. On the other hand, ROs associated with the SSBs with the SSB indices of SSB#0 to SSB#3 may not be valid for the UL forwarding operation. In other words, ROs associated with the SSBs with the SSB indices of SSB#0 to SSB#3 may not be available for the UL forwarding operation. Therefore, an UL Rx beam direction of the access link used in the time resource where the RO exists for UL forwarding may be the same direction as the DL Tx beam of the access link for each SSB index in the time resource where SSB#4 to SSB#7 associated with the RO are transmitted.

As described above, there may be a mapped beam index that performs DL Tx to an access link in a time resource where any SSB is transmitted. In this instance, time, a DL Tx beam, which has transmitted the SSB, may be used as it is as an UL Rx beam of the access link for forwarding the PRACH preamble at a time at which an RO associated with the SSB exists, based on the assumption of access link DL/UL beam correspondence of the NCR-Fwd. Therefore, the NCR-Fwd can perform UL Rx in the applied beam direction in a time resource transmitting the SSB associated with the RO, in order to perform UL Rx in a time resource to which any RO is allocated based on specific SSB-to-RO mapping information.

For example, an UL Rx beam to the access link at an UL forwarding time at which a specific RO exists may use at it is the DL Tx beam to the access link used at a DL forwarding time of an SSB with an SSB index of SSB#n associated with the RO. Here, the DL forwarding time may be t1, the UL forwarding time may be t2, and t1 may be time earlier than t2.

### Method of determining UL Rx resource of NCR-Fwd in PRACH transmission

As described above, the PRACH preamble may be transmitted in a time resource where a RO associated with a specific SSB exists. However, in the NCR environment, not all the SSBs broadcasted by the base station may be DL-forwarded by the NCR-Fwd. In order for the NCR-Fwd to perform UL Rx to the access link to perform UL forwarding of the PRACH preamble in any time resource, UL Rx needs to be performed only for an RO associated with an SSB on which NCR-Fwd DL forwarding is performed. This RO may be referred to as a valid RO. That is, in the present disclosure, the valid RO may mean an RO on which the NCR-Fwd can perform UL forwarding of the PRACH preamble to the access link.

A condition for a valid RO performing UL Rx to the access link at time at which the NCR-Fwd transmits the PRACH may be that the SSB associated with the RO performs DL Tx to the access link by the NCR-Fwd. That is, if the NCR-Fwd performs an SSB associated with an RO for DL forwarding on DL Tx of the UE in the access link, the RO may be a valid RO.

For example, there may be a case where the base station broadcasts SSBs with SSB indices of SSB#0 to SSB#7, SSBs with the SSB indices of SSB#4 to SSB#7 among the SSBs are transmitted to the UE in the access link through the NCR, and SSBs with the SSB indices of SSB#0 to #3 are transmitted to the UE in a direct link. Here, the direct link may be a link between the base station and the UE. In this case, ROs mapped to the SSBs with the SSB indices of SSB#4 to SSB#7 may be valid ROs. ROs configured to the SSBs with the SSB indices of SSB#0 to SSB#3 transmitted in the direct link may not be valid ROs. Therefore, a condition for an RO to be a valid RO may be that an SSB index of an SSB associated with the RO is an SSB index that is DL forwarded by the NCR-Fwd.

The resources for the NCR-Fwd to perform UL Rx may be determined as follows.

Approach 1. Determining UL Rx time resource of PRACH preamble through TCI-state identifier (ID) configuration in SSB transmission

The NCR-Fwd may perform DL forwarding through a DL Tx beam to an access link mapped to an SSB index. In this instance, the NCR-MT may be configured or indicated with an SSB index by a base station through a mapped TCI-state ID.

If the NCR-Fwd is configured or indicated to DL forward an SSB at a specific time, an RO associated with an SSB index of the SSB may be considered as a valid RO. The NCR-Fwd may determine a time resource, in which the valid RO exists, as a time resource in which UL Rx of a PRACH preamble is performed. Therefore, the NCR-Fwd can always expect to perform UL Rx of the access link in the time resource in which the valid RO exists.

If the NCR-Fwd does not perform DL forwarding of an SSB at a specific time, an RO associated with an SSB index of the SSB may not be considered as the valid RO. In this case, the NCR-Fwd may determine a time resource, in which the RO exists, as a time resource in which UL Rx of the PRACH preamble is not performed. Therefore, the NCR-Fwd may not always perform UL Rx of the access link in the time resource in which no valid RO exists.

Approach 2. Determining UL Rx time resource of PRACH preamble through beam index indication of access link in SSB transmission

The NCR-Fwd may perform DL forwarding to a DL Tx beam to an access link mapped to an SSB index. In this instance, the NCR-MT may be directly configured or indicated with the DL Tx beam by the base station. Alternatively, the DL Tx beam may be implementation/Operation, Administration, and Maintenance (OAM) configuration.

If the NCR-Fwd is configured or indicated to DL forward an SSB at a specific time, an RO associated with an SSB index of the SSB may be considered as a valid RO. The NCR-Fwd may determine a time resource, in which the valid RO exists, as a time resource in which UL Rx of a PRACH preamble is performed. Therefore, the NCR-Fwd can always expect to perform UL Rx of the access link in the time resource in which the valid RO exists.

If the NCR-Fwd does not perform DL forwarding of an SSB at a specific time, an RO associated with an SSB index of the SSB may not be considered as the valid RO. In this case, the NCR-Fwd may determine a time resource, in which the RO exists, as a time resource in which UL Rx of the PRACH preamble is not performed. Therefore, the NCR-Fwd may not always perform UL Rx of the access link in the time resource in which no valid RO exists.

For example, if downlink forwarding of an SSB associated with a specific RO is performed by the NCR-Fwd before time at which the specific RO exists, the time at which the specific RO exists may be determined as a time resource at which UL Rx of the PRACH preamble is performed in the access link. Here, the SSB index of the SSB may be SSB#n.

For example, if downlink forwarding of an SSB associated with a specific RO is not performed by the NCR-Fwd before time at which the specific RO exists, the time at which the specific RO exists may be determined as a time resource at which UL Rx of the PRACH preamble is not performed in the access link. Here, the time resource in which the Ro exists may refer to a symbol in which the Ro exists, or a slot including symbol.

### Method of determining UL forwarding operation of NCR-Fwd in PRACH transmission

In the NCR environment, the base station may perform configuration or indication related to an operation of the NCR-Fwd to the NCR-MT via side control information. Therefore, more intelligent beam adaptation than the existing RF repeater is possible through the NCR. In particular, in the PRACH preamble transmission, UL forwarding of the NCR-Fwd to the access link can be performed in the time resource in which the above-described valid RO exists. In this instance, a method of determining the UL forwarding operation of the NCR-Fwd to the access link may be as follows.

### UL forwarding of NCR-Fwd in time resource in which valid RO exists

The NCR-Fwd may be determined to perform UL forwarding using a UL Rx beam in a time resource in which a valid RO performing DL forwarding of a specific SSB exists. Here, the valid RO may be associated with an SSB index of the specific SSB. In this case, an UL Rx beam direction may apply, at it is, a DL Tx beam direction used when transmitting an SSB associated with the valid RO. In this case, if the base station indicates the use of a specific UL Rx beam through a separate beam specification in the time resource in which the valid RO exists, the indication may not be applied.

### The operation of the NCR-Fwd may be determined as ON in the time resource where the valid RO exists,

Here, determining as 'ON' may mean that the NCR-Fwd performs a forwarding operation. In this case, even if the base station separately indicates that an operation of the NCR-Fwd is OFF through ON/OFF indication in a time resource in which a valid RO exists, the operation of the NCR-Fwd may be determined as ON without applying the indication.

### UL forwarding of NCR-Fwd in time resource in which non-valid RO exists

The NCR-Fwd may basically determine not to perform UL forwarding in a time resource in which a non-valid RO exists. The NCR-Fwd may not be able to determine a UL Rx beam because there is no SSB index associated with the non-valid RO. However, if the base station separately indicates the UL Rx beam applied by the NCR-Fwd in the time resource and/or indicates the operation of the NCR-Fwd to be ON, the NCR-Fwd may determine to perform UL forwarding in the time resource in which the RO exists.

A time interval associated with the UL Rx beams in an access link of the NCR-Fwd determined by the SSB-to-RO mapping is used as the basic unit of an Rx beam indication, and UL Rx is performed with Rx beams mapped to an SSB index performing DL Tx in any time interval.

As shown in Table 6, based on SSB-to-RO mapping information, SSB indices may be mapped in a time resource in which a specific RO exists, and this pattern may be repeated with a period. And, there may be an SSB index #m mapped to a specific time and an SSB index #n mapped to a next time within the period. In this instance, if time intervals including the SSB indexes in which the actual NCR-Fwd performs DL forwarding are collected and re-indexed, the corresponding time interval may be a time resource in which a valid RO, to which UL Rx beams are mapped based on beam correspondence, exists. If the base station indicates, to the NCR-MT, the corresponding indexed time resource, it may be determined that the NCR-Fwd performs UL forwarding of the PRACH preamble in the corresponding time resource. Here, the time resource in which the RO exists may mean a symbol in which the RO exists or a slot including a symbol.

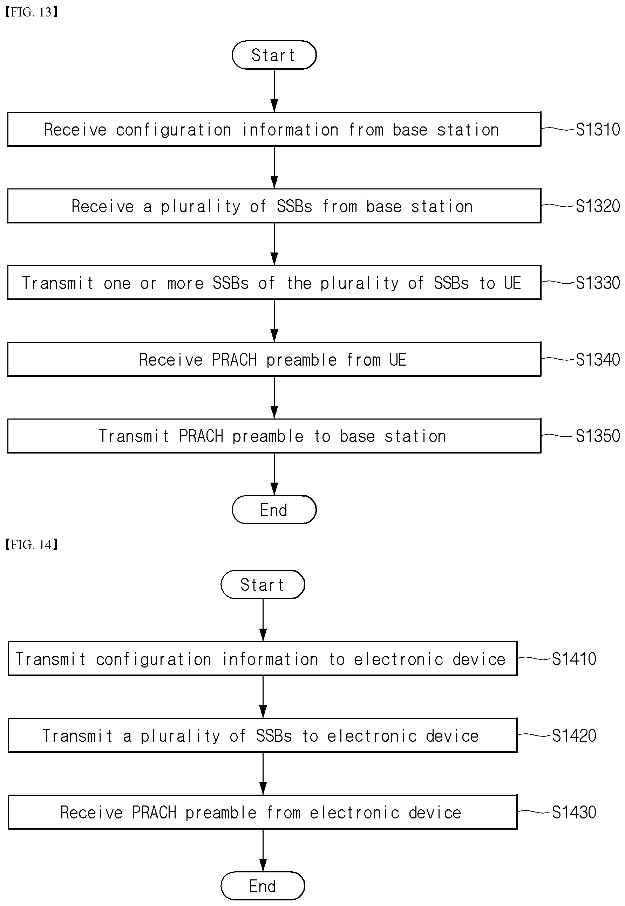

FIG. 13 is a flowchart illustrating a method of transmitting and receiving a signal according to an embodiment of the present disclosure.

In FIG. 13, an electronic device may correspond to the NCR described above.

Referring to FIG. 13, the electronic device may receive configuration information from a base station, in S1310. In an embodiment, the configuration information may include a beam index of a downlink (DL) transmit (Tx) beam. In another embodiment, the configuration information may include information for mapping between a plurality of SSBs and a plurality of ROs. The mapping between the plurality of SSBs and the plurality of ROs may be repeated periodically. The plurality of ROs may include a valid RO.

The electronic device may receive the plurality of SSBs from the base station, in S1320. The electronic device may receive the plurality of SSBs broadcasted by the base station.

The electronic device may transmit one or more SSBs of the plurality of SSBs to a UE, in S1330. The electronic device may transmit the one or more SSBs of the plurality of SSBs to the UE based on the configuration information received in S1310. The electronic device may transmit the one or more SSBs of the plurality of SSBs to the UE through the DL Tx beam indicated by the beam index included in the configuration information. Here, a specific SSB may be determined based on a specific RO related to a time resource, in which a PRACH preamble is received, among the plurality of ROs.

The electronic device may receive the PRACH preamble from the UE, in S1340. The electronic device may receive the PRACH preamble from the UE in the time resource related to the specific RO associated with the specific SSB of the one or more SSBs transmitted in S1330. Here, the specific RO may be a valid RO. The electronic device may not receive the PRACH preamble from the UE in an RO other than the valid RO among the plurality of ROs. The electronic device may receive the PRACH preamble from the UE using an uplink (UL) receive (Rx) beam. A direction of the UL Rx beam may be related to a direction of the DL Tx beam used for transmitting the one or more SSBs in S1330.

The electronic device may transmit the PRACH preamble to the base station, in S1350. The electronic device may forward the PRACH preamble received from the UE in S1340 to the base station.

FIG. 14 is a flowchart illustrating a method of transmitting and receiving a signal according to another embodiment of the present disclosure.

In FIG. 14, an electronic device may correspond to the NCR described above.

Referring to FIG. 14, a base station may transmit configuration information to the electronic device, in S1410. In an embodiment, the configuration information may include a beam index of a downlink (DL) transmit (Tx) beam of the electronic device. In another embodiment, the configuration information may include information for mapping between a plurality of SSBs and a plurality of ROs. The mapping between the plurality of SSBs and the plurality of ROs may be repeated periodically. The plurality of ROs may include a valid RO.

The base station may transmit the plurality of SSBs to the electronic device, in S1420. The base station may broadcast SSBs, and a UE may receive the broadcasted SSBs. Here, one or more SSBs of the plurality of SSBs may be transmitted from the electronic device to the UE based on the configuration information.

The base station may receive a PRACH preamble from the electronic device, in S1430. The base station may receive the PRACH preamble from the UE based on a specific SSB.

The base station may receive the PRACH preamble based on an uplink beam related to a downlink beam in which the specific SSB of the plurality of SSBs has been transmitted.

The specific SSB may be determined based on a specific RO related to a time resource, in which the PRACH preamble is received, among the plurality of ROs.

The PRACH preamble may be transmitted from the UE to the electronic device in a time resource related to the specific RO associated with the specific SSB of the one or more SSBs. The reception of the PRACH preamble from the UE by the electronic device may not be performed in an RO other than the valid RO among the plurality of ROs.

A direction of the uplink beam used for the reception of the PRACH preamble from the UE by the electronic device may be related to a direction of the downlink beam used for the transmission of the one or more SSBs to the UE by the electronic device.

### Communication system applicable to the present disclosure

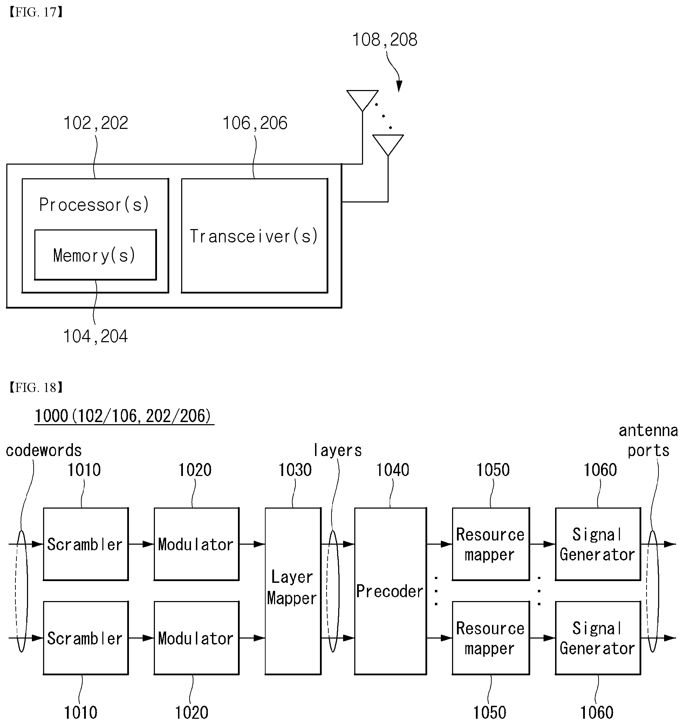

FIG. 17 illustrates a communication system applied to various embodiments of the present disclosure.

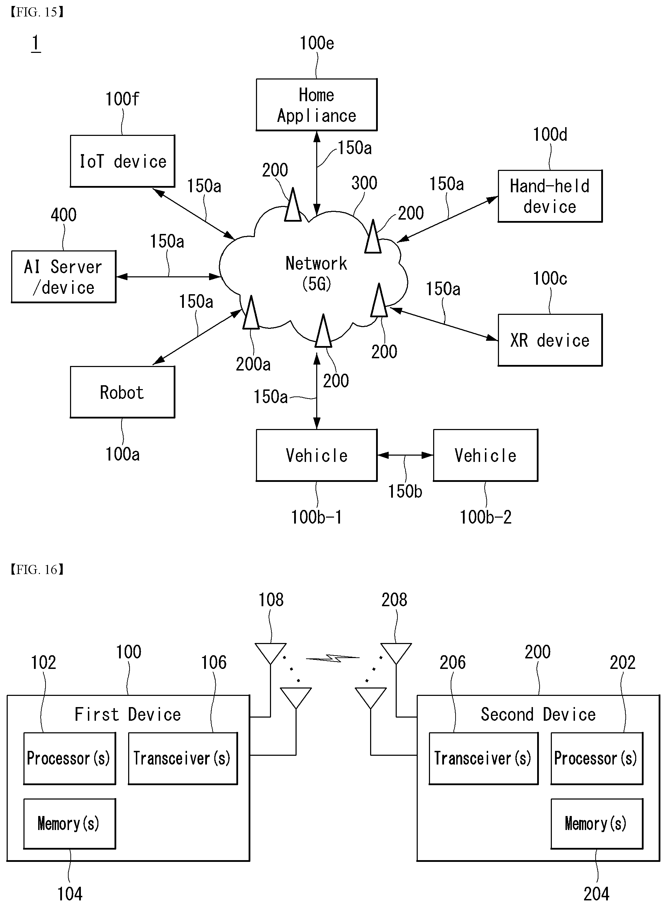

Referring to FIG. 15, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE), 6G wireless communication) and may be referred to as communication/radio/5G devices//6G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, or a 6G network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to- Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Wireless device applicable to the present disclosure

Examples of wireless devices to which various embodiments of the present disclosure are applied are described below.

FIG. 16 illustrates wireless devices applicable to various embodiments of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), RandomAccess Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 17 illustrates another example of wireless devices applicable to various embodiments of the present disclosure.

According to FIG. 17, a wireless device may include at least one processor 102 and 202, at least one memory 104 and 204, at least one transceiver 106 and 206, one or more antennas 108 and 208.

A difference between the example of the wireless device illustrated in FIG. 16 and the example of the wireless device illustrated in FIG. 17 is that the processors 102 and 202 and the memories 104 and 204 are separated from each other in FIG. 16, but the memories 104 and 204 are included in the processors 102 and 202 in FIG. 17.

Here, the detailed description of the processors 102 and 202, the memories 104 and 204, the transceivers 106 and 206, and the antennas 108 and 208 are the same as described above, and thus the description of the repeated description is omitted in order to avoid unnecessary repetition of description.

Examples of signal processing circuit to which various embodiments of the present disclosure are applied are described below.

FIG. 18 illustrates a signal processing circuit for a transmission signal.

Referring to FIG. 18, a signal processing circuit 1000 may include scramblers 1010, modulators 1020, a layer mapper 1030, a precoder 1040, resource mappers 1050, and signal generators 1060. An operation/function of FIG. 18 may be performed, without being limited to, the processors 102 and 202 and/or the transceivers 106 and 206 of FIG. 16. Hardware elements of FIG. 18 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 18. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 18. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

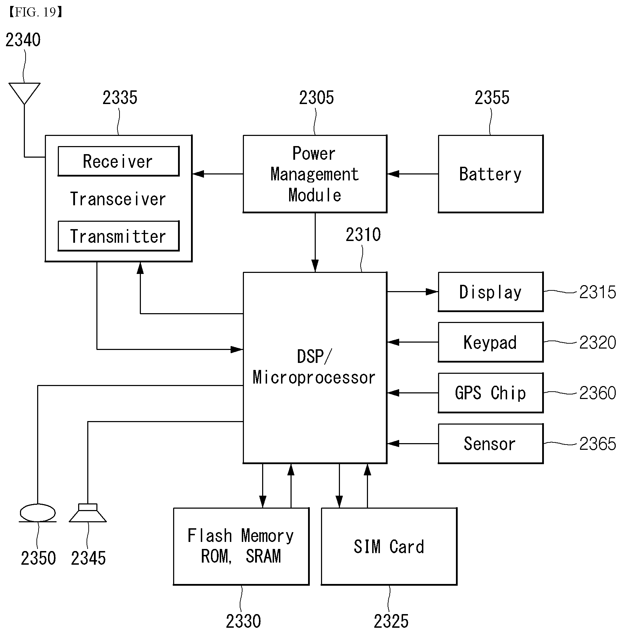

FIG. 19 illustrates an example of a wireless communication device applicable to the present disclosure.

Referring to FIG. 19, a wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 may implement functions, procedures and methods described in the present disclosure. The processor 2310 in FIG. 19 may be the processors 102 and 202 in FIG. 17.

The memory 2330 is connected to the processor 2310 and stores information related to operations of the processor 2310. The memory 2330 may be located inside or outside the processor 2310 and connected to the processor through various techniques such as wired connection and wireless connection. The memory 2330 in FIG. 19 may be the memories 204 and 204 in FIG. 17.

A user may input various types of information such as telephone numbers using various techniques such as pressing buttons of the keypad 2320 or activating sound using the microphone 2350. The processor 2310 may receive and process the information of the user and execute an appropriate function such as calling using the input telephone number. In some scenarios, data may be retrieved from the SIM card 2325 or the memory 2330 to execute appropriate functions. In some scenarios, the processor 2310 may display various types of information and data on the display 2315 for user convenience.

The transceiver 2335 is connected to the processor 2310 and transmit and/or receive radio frequency (RF) signals. The processor 2310 may control the transceiver 2335 in order to start communication or to transmit RF signals including various types of information or data such as voice communication data. The transceiver 2335 includes a transmitter and a receiver for transmitting and receiving the RF signals. The antenna 2340 may facilitate transmission and reception of the RF signals. In some implementation examples, when the transceiver receives an RF signal, the transceiver may forward and convert the signal into a baseband frequency for processing performed by the processor. The signal may be processed through various techniques, such as converting into audible or readable information, and output through the speaker 2345. The transceiver 2335 in FIG. 19 may be the transceivers 106 and 206 in FIG. 17.

Although not illustrated in FIG. 19 various components such as a camera and a universal serial bus (USB) port may be additionally included in the UE. For example, the camera may be connected to the processor 2310.

FIG. 19 is merely an example of implementation with respect to the UE, and the present disclosure is not limited thereto. The UE need not essentially include all the components illustrated in FIG. 19. That is, some of the components, for example, the keypad 2320, the GPS chip 2360, the sensor 2365, and the SIM card 2325 may not be essential components. In this case, they may not be included in the UE.

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

In the present disclosure, specific operations described to be performed by the base station may be performed by an upper node of the base station in some cases. That is, in a network including a plurality of network nodes including the base station, it is obvious that various operations performed for communication with the UE can be performed by the base station or network nodes other than the base station. The base station may be replaced with terms such as a fixed station, Node B, eNode B (eNB), and an access point.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Although embodiments of the present disclosure have been described using the LTE system, the LTE-A system and the NR system, this is merely an example and embodiments of the present disclosure can be applied to any communication system corresponding to the above definition.

In the present disclosure, specific operations described to be performed by the base station may be performed by an upper node of the base station in some cases. That is, in a network including a plurality of network nodes including the base station, it is obvious that various operations performed for communication with the UE can be performed by the base station or network nodes other than the base station. The base station may be replaced with terms such as a fixed station, Node B, eNode B (eNB), and an access point, and the name of the base station may be used as a comprehensive term including a remote radio head (RRH), eNB, a transmission point (TP), a reception point (RP), a relay, etc.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## Claims

1. A method of operating an electronic device in a wireless communication system, the method comprising:
receiving configuration information from a base station (BS);
receiving a plurality of synchronization signal blocks (SSBs) from the base station;
transmitting one or more SSBs of the plurality of SSBs to a user equipment (UE) based on the configuration information;
receiving, from the UE, a physical random access channel (PRACH) preamble in a time resource related to a specific random access channel occasion (RACH occasion, RO) associated with a specific SSB of the one or more SSBs; and
transmitting the PRACH preamble to the base station based on the specific SSB.

2. The method of claim 1, wherein a direction of an uplink transmit beam used by the UE to transmit the PRACH preamble is related to a direction of a downlink receive beam used by the UE to receive the one or more SSBs.

3. The method of claim 1, wherein the PRACH preamble is received based on an uplink transmit beam related to a downlink transmit beam in which the specific SSB of the plurality of SSBs has been received.

4. The method of claim 1, wherein the configuration information includes a beam index of a downlink transmit beam used to transmit the one or more SSBs.

5. The method of claim 1, wherein the configuration information includes information for a mapping between the plurality of SSBs and a plurality of ROs, and
wherein the specific SSB is determined based on the specific RO related to the time resource, in which the PRACH preamble is received, among the plurality of ROs.

6. The method of claim 5, wherein one or more ROs associated with the one or more SSBs among the plurality of ROs are related to a valid RO in which a reception of the PRACH preamble from the UE is expected, and
wherein the reception of the PRACH preamble from the UE is not performed in an RO other than the valid RO among the plurality of ROs.

7. The method of claim 5, wherein the mapping between the plurality of SSBs and the plurality of ROs is repeated periodically.

8. A method of operating a base station (BS) in a wireless communication system, the method comprising:
transmitting configuration information to an electronic device;
transmitting a plurality of synchronization signal blocks (SSBs) to the electronic device; and
receiving a physical random access channel (PRACH) preamble from the electronic device based on a specific SSB,
wherein one or more SSBs of the plurality of SSBs are transmitted from the electronic device to a user equipment (UE) based on the configuration information, and
wherein the PRACH preamble is transmitted from the UE to the electronic device in a time resource related to a specific random access channel occasion (RACH occasion, RO) associated with the specific SSB of the one or more SSBs.

9. The method of claim 8, wherein a direction of an uplink beam used by the electronic device to receive the PRACH preamble from the UE is related to a direction of a downlink beam used by the electronic device to transmit the one or more SSBs to the UE.

10. The method of claim 8, wherein the PRACH preamble is received based on an uplink beam related to a downlink beam in which the specific SSB of the plurality of SSBs has been transmitted.

11. The method of claim 8, wherein the configuration information includes a beam index of a downlink transmit beam in which the electronic device transmits the specific SSB to the UE.

12. The method of claim 8, wherein the configuration information includes information for a mapping between the plurality of SSBs and a plurality of ROs, and
wherein the specific SSB is determined based on the specific RO related to the time resource, in which the PRACH preamble is received, among the plurality of ROs.

13. The method of claim 12, wherein the configuration information includes downlink transmit beam information related to the one or more SSBs,
wherein one or more ROs associated with the one or more SSBs among the plurality of ROs are related to a valid RO in which a reception of the PRACH preamble from the UE is expected, and
wherein the reception of the PRACH preamble from the UE by the electronic device is not performed in an RO other than the valid RO among the plurality of ROs.

14. The method of claim 12, wherein the mapping between the plurality of SSBs and the plurality of ROs is repeated periodically.

15. An electronic device in a communication system comprising:
a first device including a first transceiver;
a second device including a second transceiver;
at least one processor; and
at least one memory operably connectable to the at least one processor and storing instructions performing operations based on being executed by the at least one processor,
wherein the operations comprise all steps of a method according to any one of claims 1 to 7.

16. A base station in a wireless communication system comprising:
a transceiver;
at least one processor; and
at least one memory operably connectable to the at least one processor and storing instructions performing operations based on being executed by the at least one processor,
wherein the operations comprise all steps of a method according to any one of claims 8 to 14.

17. A control device controlling an electronic device in a communication system, comprising:
at least one processor; and
at least one memory operably connected to the at least one processor,
wherein the at least one memory stores instructions performing operations based on being executed by the at least one processor, and
wherein the operations comprise all steps of a method according to any one of claims 1 to 7.

18. A control device controlling a base station in a communication system, comprising:
at least one processor; and
at least one memory operably connected to the at least one processor,
wherein the at least one memory stores instructions performing operations based on being executed by the at least one processor, and
wherein the operations comprise all steps of a method according to any one of claims 8 to 14.

19. One or more non-transitory computer readable mediums storing one or more instructions,
wherein the one or more instructions perform operations based on being executed by one or more processors, and
wherein the operations comprise all steps of a method according to any one of claims 1 to 7.

20. One or more non-transitory computer readable mediums storing one or more instructions,
wherein the one or more instructions perform operations based on being executed by one or more processors, and
wherein the operations comprise all steps of a method according to any one of claims 8 to 14.
